# EUROPEAN PATENT APPLICATION

(11) **EP 3 288 341 A2**
(43) Date of publication of application: **28.02.2018**
(21) Application number: 17187559.4
(22) Date of filing: 23.08.2017
(51) Int. Cl.: H05B 33/08, H02J 9/00

(54) **LIGHTING SYSTEM AND LIGHTING SOURCE MODULE THEREOF**

(30) Priority: 24.08.2016 TW 105127350
(71) Applicant: Lextar Electronics Corp., 30075 Hsinchu (TW)
(72) Inventor: WU, En-Min, 112 Taipei City (TW); HO, Hsien-Chih, 302 Hsinchu County (TW)
(74) Representative: Winter, Brandl, Fürniss, Hübner, Röss, Kaiser, Polte - Partnerschaft mbB

(57) **Abstract**

A lighting system includes a lighting source module, which includes an alternating-current input terminal and a direct-current input terminal. When an alternating-current power source is supplied, the alternating-current power source drives the lighting source module through the alternating-current input terminal for generating light. When the alternating-current power source is not supplied, a direct-current power source drives the lighting source module through the direct-current input terminal for generating light.

## Description

### BACKGROUND

### TECHNICAL FIELD

The present disclosure relates to a lighting system and the lighting source module thereof, and particularly to a light source module including an alternating-current input terminal and a direct-current input terminal and capable of receiving an alternating-current power source or a direct-current power source directly.

### DESCRIPTION OF RELATED ART

A general light source module needs an external power supply module, which supplies power to the light source module and drives the light source module to generate light for lighting. Nonetheless, in applications, the installation space of the light source module and the external power supply module should be considered, leading to more complicated installation. In addition, while using the external power supply module to supply power, the power isolation requirement in the safety regulation should be taken into account. Thereby, overall, the application cost of the general light source module is relatively high.

In addition, when the general light source module is applied to a specific lighting system with complicated circuitry, for example, an emergent lighting system, the external power supply module of the lighting system will supply power to a power input terminal for driving the light source module to generate light as the alternating-current (AC) power supply is normal, such as the non-power-failure condition. As the AC power supply is interrupted, for example, the power failure condition, the external power supply module of the lighting system is unable to supply power to the light source module. The lighting system will provide a backup power source to the power input terminal of the light source module for driving the light source module. The lighting system uses a switching circuit to supply the power of the external power supply module or the backup power source to the power input terminal of the light source module. Consequently, the complexity and cost of the design of the lighting system is raised.

Accordingly, the present disclosure provides a lighting system and the light source module thereof for simplifying the architecture of a lighting system and the installation as well as lowering the cost.

### SUMMARY

An aspect of the present disclosure is to provide a lighting system and the light source module thereof. The light source module includes an AC input terminal and a direct-current (DC) input terminal for receiving AC power or DC power directly. Thereby, the architecture, installation, and wiring of the lighting system can be simplified.

Another aspect of the present disclosure is to provide a lighting system and the light source module thereof. The light source module requires no external power supply module. Thereby, no power isolation design is required.

The present disclosure provides a lighting system, which includes a power supply module and a light source module. The power supply module provides a DC power source. The light source module is coupled to an AC power source via an AC input terminal and to the power supply module via a DC input terminal. When the AC power source exists, the power supply module does not supply the DC power source to the DC input terminal of the light source module. When the AC power source does not exist, the power supply module supplies the DC power source to the DC input terminal.

The light source module according to the present disclosure includes an internal AC power supply module, a polarity adaption circuit, and a light module. The internal power supply module is coupled to the AC power source via the AC input terminal and coverts the AC power source to a first DC driving power source. The polarity adaption circuit is coupled to the DC power source via the DC input terminal and outputs a second DC driving power source. The light module is coupled to the internal AC power supply module and the polarity adaption circuit and driven by the first or second DC driving power source for generating light. In addition, the internal AC power supply module can include a non-isolative transformer used for generating the first DC driving power source.

### BRIEF DESCRIPTION OF THE DRAWINGS

Figure 1 shows a schematic diagram of the architecture of the lighting system according to the present disclosure;
Figure 2 shows a circuit diagram of the light source module according to the present disclosure;
Figure 3 shows a circuit diagram of the internal AC power supply module and the polarity adaption circuit according to the present disclosure; and
Figure 4 shows a block diagram of the power supply module according to the present disclosure.

### DETAILED DESCRIPTION

In order to make the structure and characteristics as well as the effectiveness of the present disclosure to be further understood and recognized, the description of the present disclosure is provided as follows along with embodiments and accompanying figures.

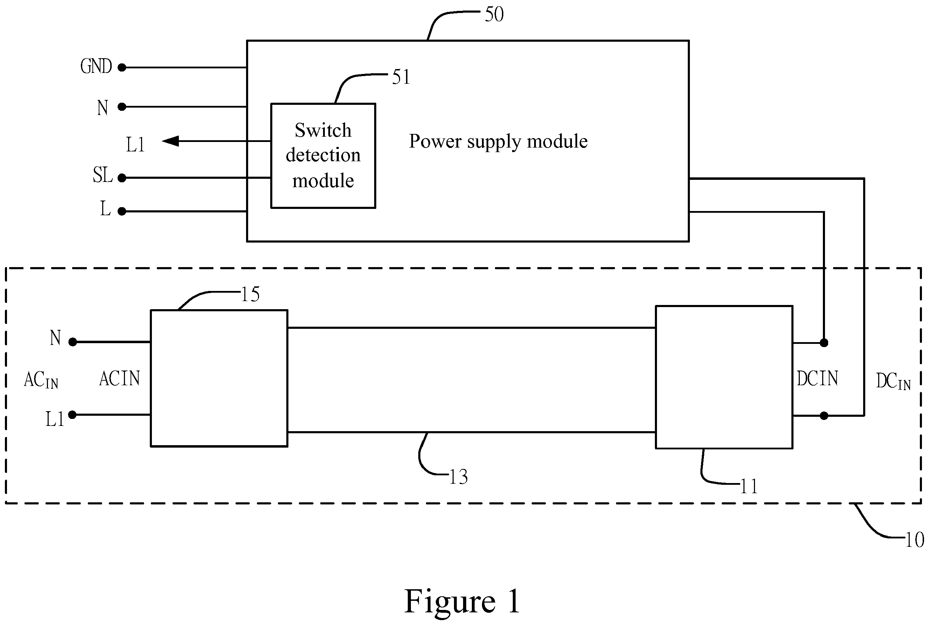

Please refer to Figure 1, which shows a schematic diagram of the architecture of the lighting system according to the present disclosure. The lighting system according to the present embodiment is used as an emergent lighting system. In the following, an emergent lighting system is taken as an example for description. Nonetheless, the application of the lighting system according to the present disclosure is not limited to an emergent lighting system. As shown in the figure, the lighting system according to the present disclosure includes the light source module 10 and the power supply module 50. The power supply module 50 provides a DC power source DC_{IN} to the light source module 10. According to the present embodiment, the power supply module 50 is an emergent power supply module, while the DC power source DC_{IN} is a backup power source. In addition, the power supply module 50 is coupled to a ground GND, a grid power source L, a grid reference voltage level N, and a grid input power source SL. According to an embodiment of the present disclosure, the light source module 10 is an LED light source module.

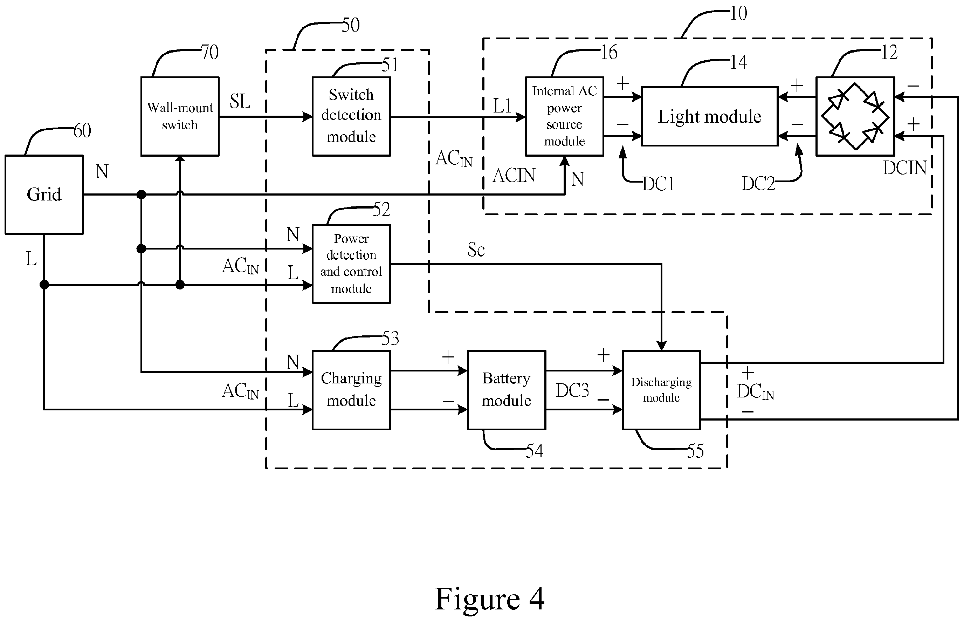

Please refer to Figure 4. The power supply module 50 is coupled to the grid power source L and the grid reference voltage level N of a grid 60. The grid power source L is an AC power source. Besides, the power supply module 50 is coupled to the grid input power source SL supplied by a wall-mount switch 70. The wall-mount switch 70 is coupled to the grid power source L of the grid 60. When the wall-mount switch 70 is closed (turn on), it will supply the grid input power source SL according to the grid power source L. According to an embodiment of the present disclosure, the grid input power source SL is identical to the grid power source L. A switch detection module 51 of the power supply module 50 is coupled to the wall-mount switch 70 and detects the conduction of the wall-mount switch 70 for generating an AC input power source L1 according to the grid input power source SL. According to an embodiment of the present disclosure, the AC input power source L1 is identical to the grid input power source SL, and thus identical to the grid power source L. In other words, the AC input power source L1 is an AC power source.

Please refer again to Figure 1. The light source module 10 includes a first lid 11, a light pervious tube 13, and a second lid 15. The first and second lids 11, 15 cover both tube openings of the light pervious tube 13, respectively. The first lid 11 includes a DC input terminal DCIN, which is coupled to the DC power source DC_{IN} supplied by the power supply module 50. The second lid 15 includes an AC input terminal ACIN, which is coupled to the grid reference voltage level N and the AC input power source L1 supplied by the power supply module 50. Namely, the DC input terminal ACIN is coupled to the AC power source AC_{IN}. As shown in Figure 4, the AC input terminal ACIN of the light source module 10 is coupled directly to the grid reference voltage level N of the grid 60, and to the grid power source L via the power supply module 50 and the wall-mount switch 70.

When the grid 60 supplies the grid power source L and the grid reference voltage level N, namely, when the AC power source AC_{IN} exists, the light source module 10 of the lighting system according to the present embodiment will be driven to generate light. Thereby, the power supply module 50 will not supply the DC power source DC_{IN} to the DC input terminal DCIN of the light source module 10. When the grid 60 does not supply the grid power source L and the grid reference voltage level N such as in power failure, namely, when the AC power source AC_{IN} does not exist, the power supply module 50 will supply the DC power source DC_{IN} to the DC input terminal DCIN for driving the light source module 10 to generate light uninterruptedly.

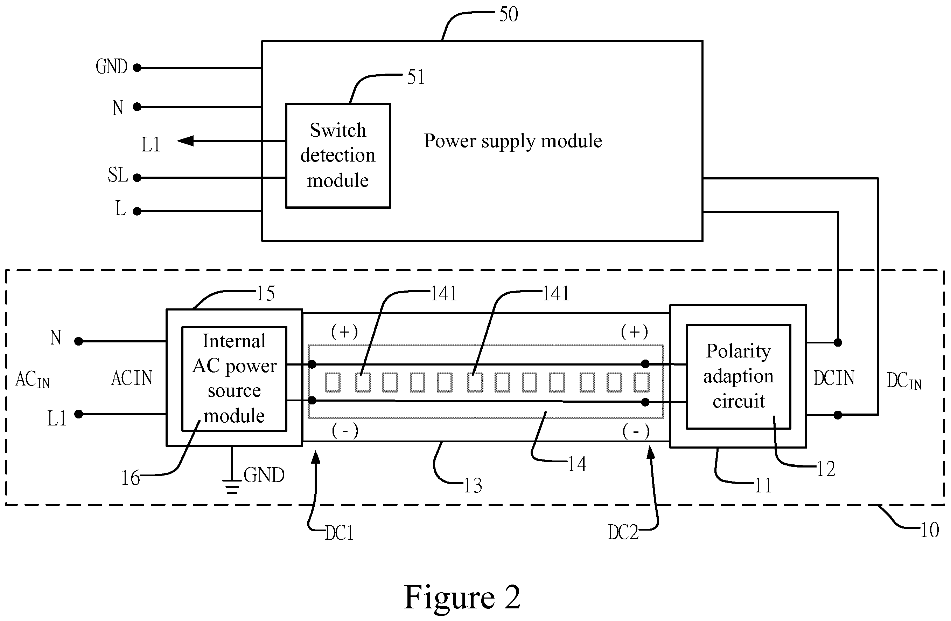

Please refer to Figure 2, which shows a circuit diagram of the light source module according to the present disclosure. As shown in the figure, the light source module 10 includes a polarity adaption circuit 12, a light module 14, and an internal AC power supply module 16. The polarity adaption circuit 12 is disposed in the first lid 11. The light module 14 is disposed in the light pervious tube 13. The internal AC power supply module 16 is disposed in the second lid 15. The polarity adaption circuit 12 is coupled between the DC input terminal DCIN and the light module 14. The internal power supply module 16 is coupled between the AC input terminal ACIN and the light module 14. In addition, the light module 14 includes a plurality of light sources 141, and includes a positive input terminal (+) and a negative input terminal (-). According to an embodiment of the present disclosure, the light module 14 is an LED module; the plurality of light sources 141 are LEDs.

The internal AC power supply module 16 is coupled to the AC power source AC_{IN} via the AC input terminal ACIN and converts the AC power source AC_{IN} to generate a first DC driving power source DC 1 to the positive input terminal (+) and the negative input terminal (-) of the light module 14. The polar adaption circuit 12 is coupled to the DC power source DC_{IN} output by the power supply module 50 via the DC input terminal DCIN. In other words, the light source module 10 receives the DC power source DC_{IN} directly, and the adaption circuit 12 of the light source module 10 outputs a second DC driving power source DC2 to the positive input terminal (+) and the negative input terminal (-) of the light module 14 according to the DC power source DC_{IN}. Thereby, the light module 14 is coupled to the internal AC power supply module 16 and the polarity adaption circuit 12, and driven by the first or second DC driving power source DC1, DC2 to generate light.

Please refer again to Figure 2. The internal AC power supply module 16 is coupled directly to the grid reference voltage level N and receives the AC input power source L1 output by the switch detection module 51. In addition, the AC input power source L1 is generated according to the grid power source L. Thereby, the internal AC power supply module 16 is coupled to the grid reference voltage level N and the grid power source L and generates the first DC driving power source DC1. Based on the above description, the light source module 10 having the internal AC power supply module 16 requires no external power supply module, and hence saving the installation of the external power supply module. Moreover, the isolative power design for an external power supply module is no longer needed, which simplifies the architecture and installation of a lighting system and thus saving cost. In wiring, the power supply module 50 of the lighting system according to the present disclosure is coupled to the grid 60, as shown in Figure 4, and the power supply module 50 is coupled to the DC input terminal DCIN and the AC input terminal ACIN of the light source module 10. While installing, only the spaces for the light source module 10 and the power supply module 50 should be arranged. Compared with the lighting system according to the prior art, the present disclosure simplifies the installation and wiring of a lighting system.

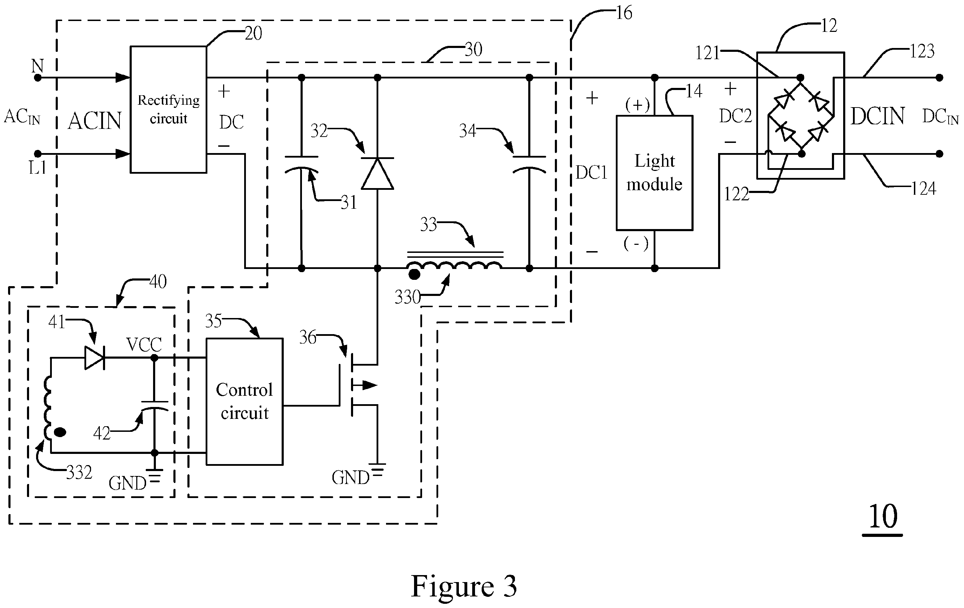

Please refer to Figure 3, which shows a circuit diagram of the internal AC power supply module and the polarity adaption circuit according to the present disclosure. As shown in the figure, the polarity adaption circuit 12 includes a bridge rectifying circuit. The polarity adaption circuit 12 includes a first terminal 121, a second terminal 122, a third terminal 123, and a fourth terminal 124. The first terminal 121 is coupled to the positive input terminal (+) of the light module 14; the second terminal 122 is coupled to the negative input terminal (-) of the light module 14; the third terminal 123 is coupled to the DC power source DC_{IN} via the DC input terminal DCIN; the fourth terminal 124 is coupled to the DC power source DC_{IN} via the DC input terminal DCIN. Thereby, while connecting the power source module 50 and the DC input terminal DCIN of the light source module 10, it is not required to consider the polarity of the output terminal of the power supply module 50. Instead, the output terminal of the power supply module 50 can be connected to the DC input terminal DCIN freely and the light source module 10 will be driven normally to generate light. Accordingly, the polarity adaption circuit 12 can enable the two electrical polarities of the DC power source DC_{IN} supplied by the power source module 50 to match adaptively the polarities of two DC input terminals of the light module 14.

For example, when the third terminal 123 of the polarity adaption circuit 12 is coupled to a positive polarity of the DC power source DC_{IN} and the fourth terminal 124 is coupled to a negative polarity of the DC power source DC_{IN}, the positive polarity of the DC power source DC_{IN} is coupled to the positive input terminal (+) of the light module 14 via the third terminal 123, the polarity adaption circuit 12, and the first terminal 121, and the negative polarity of the DC power source DC_{IN} is coupled to the negative input terminal (-) of the light module 14 via the fourth terminal 124, the polarity adaption circuit 12, and the second terminal 122. When the fourth terminal 124 of the polarity adaption circuit 12 is coupled to the positive polarity of the DC power source DC_{IN} and the third terminal 123 is coupled to the negative polarity of the DC power source DC_{IN}, the positive polarity of the DC power source DC_{IN} is coupled to the positive input terminal (+) of the light module 14 via the fourth terminal 124, the polarity adaption circuit 12, and the first terminal 12, and the negative polarity of the DC power source DC_{IN} is coupled to the negative input terminal (-) of the light module 14 via the third terminal 123, the polarity adaption circuit 12, and the second terminal 122.

According to the above description, while connecting the power supply module 50 and the light source module 10, it is not required to consider whether the electrical polarity of the two DC output terminals of the power supply module 50 matches the polarity of the two input terminals of the light module 14. This is because no matter how the third and fourth terminals 123, 124 of the polarity adaption circuit 12 are coupled to the positive and negative polarities of the DC power source DC_{IN}, respectively, the polarity adaption circuit 12 can generate the second DC driving power source DC2 matching the polarity of the two input terminals of the light module 14 according to the DC power source DC_{IN}. That is to say, the polarity adaption circuit 12 enables the DC power source DC_{IN} coupled to the DC input terminal DCIN to match the polarity of the two input terminals of the light module 14 and thus generating the second DC driving power source DC2. According to an embodiment of the present disclosure, the second DC driving power source DC2 is identical to the DC power source DC_{IN}.

Please refer again to Figure 3. The internal AC power source module 16 includes a rectifying circuit 20, a voltage regulating circuit 30, and a power source circuit 40. The rectifying circuit 20 is coupled to the AC power source AC_{IN} via the AC input terminal ACIN. The rectifying circuit 20 rectifies the AC power source AC_{IN} to generate a rectified DC power source DC. The voltage regulating circuit 30 is coupled to the rectifying circuit 20 and generates the first DC driving power source DC1 according to the rectified DC power source DC. The power source circuit 40 is coupled to the voltage regulating circuit 30 and generates a supply power source VCC to a control circuit 35 of the voltage regulating circuit 30 according to the rectified DC power source DC.

Furthermore, according to an embodiment of the present disclosure, the voltage regulating circuit 30 is a buck converter. Nonetheless, the voltage regulating circuit 30 is not limited to a buck converter; alternatively, it can be boost converter. The voltage regulating circuit 30 according to the present embodiment includes a filter 31, a first diode 32, a non-isolative transformer 33, a first energy storage device 34, the control circuit 35, and a switch 36. Because the voltage regulating circuit 30 of the light source module 10 adopts the non-isolative transformer 33, the internal AC power supply module 16 can be disposed inside the light source module 10. It is not required to design for power isolation. The filter 31 is coupled to the rectifying circuit 20 and filters the rectified DC power source DC. The first diode 32 is coupled to the filter 31 and the non-isolative transformer 33. The non-isolative transformer 33 includes a primary winding 330 and a secondary winding 332. A first end of the primary winding 330 is coupled to the first energy storage device 34 and the light module 14. A second end of the primary winding 330 is coupled to the first diode 32 and the filter 31. Besides, the secondary winding 332 is the device in the power source circuit 40 responsible for generating the supply power source VCC. The first energy storage device 34 is coupled to the light module 14, the filter 31, and the first diode 32 and generates the first DC driving power source DC1. The control circuit 35 is coupled to the power source circuit 40 and the switch 36. The switch 36 is coupled between the first diode 32 and the ground GND. The light module 14 is coupled to the filter 31 and the first diode 32. The switch 36 is also coupled between the ground GND and the second end of the primary winding 330.

Accordingly, the control circuit 35 can control the closing (turn on) or opening (turn off) of the switch 36. When the control circuit 35 controls the switch 36 to close, the rectified DC power source DC filtered by the filter 31 passes through the light module 14 and charges the primary winding 330, enabling the primary winding 330 to store storage electrical energy. At this time, the secondary winding 332 will induce the charging state of the primary winding 330 and generate the supply power source VCC. On the other hand, when the control circuit 35 controls the switch 36 to open, the primary winding 330 will release the storage electrical energy to the first energy storage device 34 via the first diode 32. Hence, the first energy storage device 34 supplies the first DC driving power source DC_{IN} to the light module 14 according the storage electrical energy of the primary winding 330.

The power source circuit 40 includes a second diode 41 and a second energy storage device 42. The second diode 41 is coupled to the secondary winding 332 of the non-isolative transformer 33; the second energy storage device 42 is coupled to the second diode 41 and the control circuit 35. Thereby, the secondary winding 332 induces the charging state of the primary winding 3330 and generates electrical energy, which charges the second energy storage device 42 via the second diode 41 and thus generating the supply power source VCC. Accordingly, the second energy storage device 42 of the power source circuit 40 will generate the supply power source VCC according to the rectified DC power source DC and supply the supply power source VCC to the control circuit 35. The supply power source VCC can be used as the power source for the control circuit 35.

Please refer to Figure 4, which shows a block diagram of the power supply module according to the present disclosure. As shown in the figure, the grid 60 includes the grid reference voltage level N and the grid power source L. The grid reference voltage level N is coupled directly to the light source module 10 and the power supply module 50. The grid power source L is coupled directly to the power supply module 50, which will detect the state of the grid power source L. In other words, the power supply module 50 is coupled to the AC power source AC_{IN} and detects the state of the AC power source AC_{IN}.

Moreover, the power supply module 50 includes the switch detection module 51, a power detection and control module 52, a charging module 53, a battery module 54, and a discharging module 55. The wall-mount switch 70 is coupled to the grid power source L and generates the grid input power source SL to the switch detection module 51. The grid input power source SL is equivalent to the grid power source L. Thereby, the wall-mount switch 70 controls the path along which the grid power source L is transmitted to the switch detection module 51. The switch detection module 51 receives the grid input power source SL and generates the AC input power source L1 to the AC input terminal ACIN of the light source module 10. In other words, the switch detection module 51 is coupled between the AC input terminal ACIN of the light source module 10 and the wall-mount switch 70 for detecting the conduction of the wall-mount switch 70, and then transmitting the AC input power source L1 to the AC input terminal ACIN. Equivalently, the grid power source L is transmitted to the AC input terminal ACIN.

In addition, the grid power source L, the grid input power source SL, and the AC input power source L1 are all AC power sources. According to an embodiment of the present disclosure, the wall-mount switch 70 and the switch detection module 51 does not regulate the grid power source L. Thereby, after passing the wall-mount switch 70 and the switch detection module 51, the grid power source L is input directly to the AC input terminal ACIN of the light source module 10. That is to say, the wall-mount switch 70 and the switch detection module 51 transmit the AC power source AC_{IN} to the AC input terminal ACIN, and the light source module 10 can receive the AC power source AC_{IN} directly.

Please refer again to Figure 4. Likewise, the power detection and control module 52 and the charging module 53 are coupled directly to the grid 60 (the AC power source AC_{IN}). The power detection and control module 52 is coupled to the AC power source AC_{IN} and the discharging module 55, and detects the state of the AC power source AC_{IN} (the grid 60) and generating a control signal SC according to the state of the AC power source AC_{IN}. The power detection and control module 52 outputs the control signal SC to the discharging module 55 and controls the discharging module 55. The charging module 53 charges the battery module 54 according to the AC power source AC_{IN}. In addition, the discharging module 55 is coupled to the battery module 54 and the power detection and control module 52, and receives the control signal SC and a DC output power source DC3 supplied by the battery module 54. The control signal SC controls the discharging module 55 to generate the DC power source DC_{IN} for the light source module 10 according to the DC output power source DC3.

Based on the above description, when the power detection and control module 52 detects the existence of the AC power source AC_{IN}, the power detection and control module 52 will generate the control signal SC and thus controlling the discharging module 55 not to supply the DC powers source DCIN to the DC input terminal DCIN of the light source module 10. At this moment, the light source module 10 receives the AC power source AC_{IN} directly and generates the first DC driving power source DC1 to the light module 14. Besides, the polarity adaption circuit 12 will block the first DC driving power source DC1 from transmitting to the DC input terminal DCIN for preventing damaging the power supply module 50. Furthermore, the present disclosure does not limit the design of the polarity adaption circuit 12 to bridge rectifying circuit only.

On the other hand, when the power detection and control module 52 detects that the AC power source AC_{IN} does not exist, the power detection and control module 52 will generate the control signal SC and thus controlling the discharging module 55 to supply the DC powers source DCIN to the DC input terminal DCIN, so that the light source module 10 can generate the second DC driving power source DC2 and drive the light module 14 to generate light.

To sum up, the present disclosure provides a lighting system, which includes a power supply module and a light source module. The power supply module provides a DC power source. The light source module is coupled to an AC power source via an AC input terminal and to the power supply module via a DC input terminal. When the Ac power source exists, the power supply module does not supply the DC power source to the DC input terminal of the light source module. When the AC power source does not exist, the power supply module supplies the DC power source to the DC input terminal. The light source module can receive the AC or DC power source directly. Thereby, the architecture, installation, and wiring of a lighting system can be simplified.

In addition, the light source module according to the present disclosure includes an internal AC power supply module, a polarity adaption circuit, and a light module. The internal power supply module is coupled to the AC power source via the AC input terminal and coverts the AC power source to a first DC driving power source. The polarity adaption circuit is coupled to the DC power source via the DC input terminal and outputs a second DC driving power source. The light module is driven by the first or second DC driving power source for generating light.

## Claims

1. A light source module (10), which has a light module (14), said light module (14) coupled to generate a light source, the light source module (10) **characterized in that** comprising:
a first lid (11), comprising a direct-current input terminal (DCIN) coupled to a direct-current power source (DC_{IN}) supplied by a power supply module (50);
a second lid (15), comprising an alternating-current input terminal (ACIN), coupled to an alternating-current power source (AC_{IN});
an internal alternating-current power source module (16), coupled to said alternating-current power source (AC_{IN}) via said alternating-current input terminal (ACIN), and converting said alternating-current power source (AC_{IN}) to generate a first direct-current driving power source (DC1);
a polarity adaption circuit (12), coupled to said direct-current power source (DC_{IN}) via said direct-current input terminal (DCIN), and outputting a second direct-current driving power source (DC2); and
said light module (14), coupled to said internal alternating-current power supply module (16) and said polarity adaption circuit (12), and driven by said first direct-current driving power source (DC1) or said second direct-current driving power source (DC2) for generating said light source.

2. The light source module (10) of claim 1, wherein said polarity adaption circuit (12) enables the two electrical polarities of said direct-current power source (DC_{IN}) coupled to said direct-current input terminal (DCIN) to match the polarity of the two input terminals of said light module (14) and generate said second direct-current driving power source (DC2).

3. The light source module (10) of claim 2, wherein said polarity adaption circuit (12) includes:
a first terminal (121), coupled to a positive input terminal (+) of said light module (14);
a second terminal (122), coupled to a negative input terminal (-) of said light module (14);
a third terminal (123), coupled to a positive polarity or a negative polarity of said direct-current power source (DC_{IN}); and
a fourth terminal (124), coupled to said negative polarity or said positive polarity of said direct-current power source (DC_{IN});
where when said third terminal (123) is coupled to said positive polarity and said fourth terminal (124) is coupled to said negative polarity, said positive polarity is coupled to said positive input terminal (+) via said third terminal (123) and said first terminal (121); when said fourth terminal (124) is coupled to said positive polarity and said third terminal (123) is coupled to said negative polarity, said positive polarity is coupled to said positive input terminal (+) via said fourth terminal (124) and said first terminal (121);

4. The light source module (10) of claim 1, wherein said internal alternating-current power supply module (16) includes:
a rectifying circuit (20), coupled to said alternating-current power source (AC_{IN}) via said alternating-current input terminal (ACIN), and rectifying said alternating-current power source (AC_{IN}) to generate a rectified direct-current power source (DC); and
a voltage regulating circuit (30), coupled to said rectifying circuit (20), and generating said first direct-current driving power source (DC1) according to said rectified direct-current power source (DC).

5. The light source module (10) of claim 4, wherein said voltage regulating circuit (30) includes:
a non-isolative transformer (33), having a primary winding (330), and a first end of said primary winding (330) coupled to said light module (14);
a switch (36), coupled between a ground (GND) and a second end of said primary winding (330);
a control circuit (35), coupled to said switch (36), and controlling the closing or opening of said switch (36);
a filter (31), coupled to said rectifying circuit (20) and said light module (14), filtering said rectified direct-current power source (DC), and said filtered rectified direct-current power source charging said primary winding (330) when said control circuit (35) controls said switch (36) to close;
a first energy storage device (34), coupled to said first end of said primary winding (330), said filter, and said light module (14), and generating said first direct-current driving power source (DC1); and
a first diode (32), coupled to said second end of said primary winding (330), said first energy storage device (34), and said light module (14), and said primary winding (330) releasing storage electrical energy to said first energy storage device (34) via said first diode (32) when said control circuit (35) controls said switch (36) to open.

6. The light source module (10) of claim 5, and further comprising a power source circuit (40) including:
a second diode (41), coupled to a secondary winding (332) of said non-isolative transformer (33); and
a second energy storage device (42), coupled to said second diode (41) and said control circuit (35), and generating a supply power source (VCC) for said control circuit (35).

7. The light source module (10) of claim 1, wherein said polarity adaption circuit (12) blocks said first direct-current driving power source (DC1) from transmitting to said direct-current input terminal (DCIN).

8. A lighting system (10 and 50), which has a power supply module (50), said power supply module (50) supplying a direct-current power source (DC_{IN}), the lighting system (10 and 50) **characterized in that** comprising:
a light source module (10) comprising a first lid (11) and a second lid (15) wherein the first lid (11) comprises a direct-current input terminal (DCIN) and the second lid (15) comprises an alternating-current input terminal (ACIN), and the light source module (10) is coupled to an alternating-current power source (AC_{IN}) via the alternating-current input terminal (ACIN), and to said power supply module (50) via the direct-current input terminal (DCIN);
where when said alternating-current power source (AC_{IN}) exists, said power supply module (50) does not supply said direct-current power source (DC_{IN}) to said direct-current input terminal (DCIN) of said light source module (10), and
when said alternating-current power source (AC_{IN}) does not exist, said power supply module (50) supplies said direct-current power source (DC_{IN}) to said direct-current input terminal (DCIN).

9. The lighting system (10 and 50) of claim 8, wherein said power supply module (50) is coupled to said alternating-current power (AC_{IN}) and detects the state of said alternating-current power source (AC_{IN}); when said alternating-current power source (AC_{IN}) exists, said power supply module (50) does not supply said direct-current power source (DC_{IN}); and when said alternating-current power source (AC_{IN}) does not exist, said power supply module supplies said direct-current power source (DC_{IN}).

10. The lighting system (10 and 50) of claim 8, wherein said power supply module (50) includes:
a battery module (54);
a charging module (53), coupled to said alternating-current power source (AC_{IN}) for charging said battery module (54);
a discharging module (55), coupled to said battery module (54), and generating said direct-current power source (DC_{IN}) according to a direct-current output power source (DC3) supplied by said battery module (54); and
a power detection and control module (52), coupled to said alternating-current power source (AC_{IN}) and said discharging module (55), detecting the state of said alternating-current power source (AC_{IN}), and controlling the discharging module (55) according to the state of said alternating-current power source (AC_{IN}).

11. The lighting system (10 and 50) of claim 8, wherein said power supply module (50) includes a switch detection module (51), coupled between said alternating-current input terminal (ACIN) of said light-source module (10) and a wall-mount switch (70), said wall-mount switch (70) coupled to said alternating-current power source (AC_{IN}), and said switch detection module (51) detecting the closing or opening of said wall-mount switch (70) for transmitting said alternating-current power source (AC_{IN}) to said alternating-current input terminal (ACIN).

12. The lighting system (10 and 50) of claim 8, wherein said light source module (10) includes:
an internal alternating-current power source module (16), coupled to said alternating-current power source (AC_{IN}) via said alternating-current input terminal (ACIN), and converting said alternating-current power source (AC_{IN}) to generate a first direct-current driving power source (DC1);
a polarity adaption circuit (12), coupled to said direct-current power source (DC_{IN}) via said direct-current input terminal (DCIN), and outputting a second direct-current driving power source (DC2); and
a light module (14), coupled to said internal alternating-current power supply module (16) and said polarity adaption circuit (12), and driven by said first direct-current driving power source (DC1) or said second direct-current driving power source (DC2) for generating a light source.

13. The lighting system (10 and 50) of claim 12, wherein said polarity adaption circuit (12) enables the two electrical polarities of said direct-current power source (DC_{IN}) coupled to said direct-current input terminal (DCIN) to match the polarity of the two input terminals of said light module (14) and generate said second direct-current driving power source (DC2).

14. The lighting system (10 and 50) of claim 13, wherein said polarity adaption circuit (12) includes:
a first terminal (121), coupled to a positive input terminal (+) of said light module (14);
a second terminal (122), coupled to a negative input terminal (-) of said light module (14);
a third terminal (123), coupled to a positive polarity or a negative polarity of said direct-current power source (DC_{IN}); and
a fourth terminal (124), coupled to said negative polarity or said positive polarity of said direct-current power source (DC_{IN});
where when said third terminal (123) is coupled to said positive polarity and said fourth terminal (124) is coupled to said negative polarity, said positive polarity is coupled to said positive input terminal (+) via said third terminal (123) and said first terminal (121); when said fourth terminal (124) is coupled to said positive polarity and said third terminal (123) is coupled to said negative polarity, said positive polarity is coupled to said positive input terminal (+) via said fourth terminal (124) and said first terminal (121);

15. The lighting system (10 and 50) of claim 12, wherein said internal alternating-current power supply module (16) includes:
a rectifying circuit (20), coupled to said alternating-current power source (AC_{IN}) via said alternating-current input terminal (ACIN), and rectifying said alternating-current power source (AC_{IN}) to generate a rectified direct-current power source (DC); and
a voltage regulating circuit (30), coupled to said rectifying circuit (20), and generating said first direct-current driving power source (DC1) according to said rectified direct-current power source (DC).

16. The lighting system (10 and 50) of claim 15, wherein said voltage regulating circuit (30) includes:
a non-isolative transformer (33), having a primary winding (330), and a first end of said primary winding (330) coupled to said light module (14);
a switch (36), coupled between a ground (GND) and a second end of said primary winding (330);
a control circuit (35), coupled to said switch (36), and controlling the closing or opening of said switch (36);
a filter (31), coupled to said rectifying circuit (20) and said light module (14), filtering said rectified direct-current power source (DC), and said filtered rectified direct-current power source charging said primary winding (330) when said control circuit (35) controls said switch (36) to close;
a first energy storage device (34), coupled to said first end of said primary winding (330), said filter (31), and said light module (14), and generating said first direct-current driving power source (DC1); and
a first diode (32), coupled to said second end of said primary winding (330), said first energy storage device (34), and said light module (14), and said primary winding (330) releasing storage electrical energy to said first energy storage device (34) via said first diode (32) when said control circuit (35) controls said switch (36) to open.

17. The lighting system (10 and 50) of claim 16, and further comprising a power source circuit (40) including:
a second diode (41), coupled to a secondary winding (332) of said non-isolative transformer (33); and
a second energy storage device (42), coupled to said second diode (41) and said control circuit (35), and generating a supply power source (VCC) for said control circuit (35).

18. The lighting system (10 and 50) of claim 12, wherein said polarity adaption circuit (12) blocks said first direct-current driving power source (DC1) from transmitting to said direct-current input terminal (DCIN).
